# EUROPÄISCHE PATENTANMELDUNG

(11) **EP 3 517 233 A1**
(43) Veröffentlichungstag der Anmeldung: **31.07.2019**
(21) Anmeldenummer: 19154026.9
(22) Anmeldetag: 28.01.2019
(51) Int. Cl.: B22F 3/105, B33Y 10/00, B33Y 30/00, B33Y 50/02, B29C 64/153, B29C 64/393

(54) **SCHICHTBAUVERFAHREN UND SCHICHTBAUVORRICHTUNG ZUM ADDITIVEN HERSTELLEN ZUMINDEST EINES BAUTEILBEREICHS EINES BAUTEILS**

(30) Priorität: 29.01.2018 DE 102018201255
(71) Anmelder: MTU Aero Engines AG, 80995 München (DE)
(72) Erfinder: Ladewig, Alexander, 83707 Bad Wiessee (DE); Bamberg, Joachim, 85221 Dachau (DE); Jakimov, Andreas, 85777 Fahrenzhausen (DE); Rott, Sebastian, 81675 München (DE); Schlothauer, Steffen, 85253 Erdweg (DE); Greitemeier, Daniel, 85241 Hebertshausen (DE); Schacher, Michael, 91085 Weisendorf (DE)

(57) **Zusammenfassung**

Die Erfindung betrifft ein Schichtbauverfahren zum additiven Herstellen zumindest eines Bauteilbereichs eines Bauteils (26), insbesondere eines Bauteils (26) einer Strömungsmaschine. Das Schichtbauverfahren umfasst zumindest die Schritte a) Auftragen von mindestens einer Pulverschicht (P) eines Werkstoffs (W) auf mindestens eine Aufbau- und Fügezone (A) mindestens einer absenkbaren Bauplattform (16), b) lokales Verfestigen des Werkstoffs (W) zum Ausbilden einer Bauteilschicht (10) durch selektives Belichten des Werkstoffs (W) mit wenigstens einem Energiestrahl (E) gemäß einer vorbestimmten Belichtungsstrategie, c) Schichtweises Absenken der Bauplattform (16) um eine vordefinierte Schichtdicke und d) Wiederholen der Schritte a) bis c) bis zur Fertigstellung des Bauteilbereichs. Im Anschluss an wenigstens einen der Schritte a) bis c) wird mittels eines Überwachungssystems (24) ein Ergebnis des betreffenden Schritts ermittelt und bewertet, wonach wenigstens ein Korrekturzwischenschritt e) zum Verbessern des ermittelten Ergebnisses ausgeführt wird, wenn die Bewertung eine unzulässige Abweichung des ermittelten Ergebnisses von einem vorgegebenen Ergebnis für den betreffenden Schritt ergibt. Die Erfindung betrifft weiterhin eine entsprechende Schichtbauvorrichtung.

## Beschreibung

Die Erfindung betrifft ein Schichtbauverfahren zum additiven Herstellen zumindest eines Bauteilbereichs eines Bauteils. Die Erfindung betrifft weiterhin eine Schichtbauvorrichtung zur additiven Herstellung zumindest eines Bauteilbereichs eines Bauteils durch ein additives Schichtbauverfahren.

Additive Schichtbauverfahren bezeichnen Prozesse, bei denen anhand eines virtuellen Modells eines herzustellenden Bauteils oder Bauteilbereichs Geometriedaten ermittelt werden, welche in Schichtdaten zerlegt werden (sog. "slicen"). Abhängig von der Geometrie des Modells wird eine Belichtungsstrategie bestimmt, gemäß welcher die selektive Verfestigung eines Werkstoffs erfolgen soll. Neben der Anzahl und Anordnung von Belichtungsvektoren, zum Beispiel Streifenbelichtung, Islandstragie etc., umfasst die Belichtungsstrategie weitere Prozessparameter wie beispielsweise die Leistung eines zum Verfestigen zu verwendenden Hochenergiestrahls sowie die Unterteilung in sogenannte Up-, In- und Downskinbereiche. Gemäß der Belichtungsstrategie wird dann der gewünschte Werkstoff schichtweise abgelagert und selektiv mittels wenigstens eines Hochenergiestrahls verfestigt, um den Bauteilbereich additiv aufzubauen. Damit unterscheiden sich additive bzw. generative Herstellungsverfahren von konventionellen abtragenden oder urformenden Fertigungsmethoden. Beispiele für additive Herstellungsverfahren sind generative Lasersinter- bzw. Laserschmelzverfahren, die zur Herstellung von Bauteilen für Strömungsmaschinen wie Flugtriebwerke verwendet werden können. Beim selektiven Laserschmelzen werden dünne Pulverschichten des oder der verwendeten Werkstoffe auf eine Bauplattform aufgebracht und mit Hilfe eines oder mehrerer Laserstrahlen lokal im Bereich einer Aufbau- und Fügezone aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil bzw. der fertige Bauteilbereich erhalten wird. Das Bauteil kann anschließend bei Bedarf weiterbearbeitet oder ohne weitere Bearbeitungsschritte verwendet werden. Beim selektiven Lasersintern wird das Bauteil in ähnlicher Weise durch laserunterstütztes Sintern von pulverförmigen Werkstoffen hergestellt.

Derartige Schichtbauverfahren werden üblicherweise durch eine Vielzahl an Sensoren überwacht und dokumentiert. Häufig wird im Nachhinein, das heißt nach der Fertigstellung des gewünschten Bauteils oder Bauteilbereichs, das Bauergebnis anhand der vorliegenden Daten bewertet. In diesem Moment ist jedoch, sollte eine unzulässige Prozessstörung aufgetreten sein, bereits ein Defekt in das aufgebaute Bauteil eingebracht, welcher nachträglich in der Regel nicht mehr repariert werden kann. Das hergestellte Bauteil ist somit Ausschuss. Zur Vermeidung fehlerhafter Bauteile existieren sogenannte "Closed-Loop" Regelungen, bei welchen der Belichtungs- bzw. Verfestigungsschritt überwacht und ein direktes Nachregeln der Prozessparameter während des Belichtungsschrittes angestrebt wird, sobald eine Prozessstörung erkannt wird.

Als nachteilig an den bekannten Schichtbauverfahren und -vorrichtungen ist der Umstand anzusehen, dass ein direktes Nachregeln der Prozessparameter während des Belichtungsschrittes vergleichsweise aufwändig und fehlerträchtig ist und selbst im Erfolgsfall nur einen relativ geringen Teil aller möglichen Prozesstörungen erfasst, so dass der Anteil an fehlerhaften Bauteilen auf diese Weise nur unzureichend verringert werden kann.

Aufgabe der vorliegenden Erfindung ist es, ein Schichtbauverfahren und eine Schichtbauvorrichtung der eingangs genannten Art so zu verbessern, dass eine bessere Prozesskontrolle und eine Verringerung von Prozessstörungen ermöglicht sind. Eine weitere Aufgabe der Erfindung besteht darin, ein Speichermedium mit einem Programmcode anzugeben, welcher eine entsprechende Steuerung einer solchen Schichtbauvorrichtung sicherstellt.

Die Aufgaben werden erfindungsgemäß durch ein Schichtbauverfahren mit den Merkmalen des Patentanspruchs 1, durch eine Schichtbauvorrichtung mit den Merkmalen des Patentanspruchs 10 sowie durch ein Speichermedium gemäß Patentanspruch 13 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Schichtbauverfahren zum additiven Herstellen zumindest eines Bauteilbereichs eines Bauteils, insbesondere eines Bauteils einer Strömungsmaschine. Das Schichtbauverfahren umfasst zumindest die Schritte a) Auftragen von mindestens einer Pulverschicht eines Werkstoffs (W) auf mindestens eine Aufbau- und Fügezone mindestens einer absenkbaren Bauplattform, b) lokales Verfestigen des Werkstoffs (W) zum Ausbilden einer Bauteilschicht durch selektives Belichten des Werkstoffs (W) mit wenigstens einem Energiestrahl gemäß einer vorbestimmten Belichtungsstrategie, c) Schichtweises Absenken der Bauplattform um eine vordefinierte Schichtdicke und d) Wiederholen der Schritte a) bis c) bis zur Fertigstellung des Bauteilbereichs. Eine verbesserte Prozesskontrolle und eine Verringerung von Prozessstörungen wird erfindungsgemäß dadurch ermöglicht, dass im Anschluss an wenigstens einen der Schritte a) bis c) mittels eines Überwachungssystems ein Ergebnis des betreffenden Schritts ermittelt und bewertet wird, wonach wenigstens ein Korrekturzwischenschritt e) zum Verbessern des ermittelten Ergebnisses ausgeführt wird, wenn die Bewertung eine unzulässige Abweichung des ermittelten Ergebnisses von einem vorgegebenen Ergebnis für den betreffenden Schritt ergibt. Mit anderen Worten ist es erfindungsgemäß vorgesehen, dass nach Beendigung wenigstens eines der drei Prozessschritte a) bis c) (a) Beschichten, b) Verfestigen, c) Absenken) eine Kontrolle des Ergebnisses (Output) des betreffenden Prozessschritts a), b) und/oder c) erfolgt, indem das Ergebnis mittels des Überwachungssystems ermittelt und beurteilt wird, ob es einem für den betreffenden Schritt gewünschten Ergebnis entspricht bzw. innerhalb akzeptabler Abweichungen liegt. Nachdem das Ergebnis (Output) jedes Schritts a) bis c) zumindest eine Voraussetzung (Input) für die Durchführung des jeweils nachfolgenden Schritts (b), c) und/oder d)) darstellt, kann auf diese Weise bedarfsgerecht sichergestellt werden, dass nicht nur etwaige Verfestigungsfehler, sondern auch andere Prozessabweichungen und Materialstörungen zuverlässig ermittelt, bewertet und im Fall unzulässiger Abweichungen im Rahmen des betreffenden Korrekturzwischenschritts e) behoben werden. Hierdurch wird verhindert, dass ein nachfolgender Prozessschritt b), c) und/oder d) mit einem fehlerhaften "Input" durchgeführt wird, was zusätzliche Fehler nach sich ziehen würde. Neben einer Reduzierung von Ausschuss können auf diese Weise auch Prüfzeiten reduziert werden, da die Ermittlung, Beurteilung und Korrektur automatisiert bzw. ohne manuelle Eingriffe mit Hilfe des Überwachungssystems erfolgen kann. Damit können auch komplexe Bauteile zuverlässig gefertigt werden. Grundsätzlich ist es möglich, dass lediglich das Ergebnis eines der Schritte a) bis c) mittels des Überwachungssystems ermittelt und beurteilt wird. Bevorzugt wird aber das Ergebnis von wenigstens zwei der Schritte a), b), c) und vorzugsweise von allen drei Schritten a) bis c) ermittelt und beurteilt, um eine besonders zuverlässige Prozesskontrolle mit einer entsprechend hohen Bauqualität und einer zuverlässigen Vermeidung von Ausschuss zu erreichen. Weiterhin ist es grundsätzlich möglich, dass das Ergebnis wenigstens eines der Schritte a) bis c) nur für eine Bauteilschicht, für mehrere Bauteilschichten oder für alle Bauteilschichten ermittelt, beurteilt und gegebenenfalls in einem entsprechenden Schritt e) korrigiert wird. Im Rahmen des Korrekturzwischenschritts e) werden generell Handlungen vorgenommen, die zu einer Verbesserung des ermittelten Ergebnisses im Sinne des vorgegebenen Ergebnisses führen bzw. führen können. Wenn beispielsweise nach Schritt a) ein unzureichender Auftrag der Pulverschicht festgestellt wird, kann im Rahmen des Korrekturzwischenschritts e) ein erneutes Auftragen der Pulverschicht durchgeführt werden. Wenn nach Schritt b) eine unzureichende Oberflächenbeschaffenheit der hergestellten Bauteilschicht ermittelt wird, kann in Abhängigkeit des Fehlers im Rahmen des Korrekturzwischenschritts e) beispielsweise ein wiederholtes Überschweißen und/oder ein mechanisches Abtragen von überschüssigem Material durchgeführt werden. Wenn nach Schritt c) ein fehlerhaftes Absenken der Bauplattform festgestellt wird, kann die Bauplattform im Rahmen des Korrekturzwischenschritts e) beispielsweise neu positioniert werden, um ein exaktes Verfahren der Bauplattform um die vordefinierte Schichtdicke sicherzustellen usw. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

Erfindungsgemäß ist vorgesehen, dass im Anschluss an den wenigstens einen Korrekturzwischenschritt e) mittels des Überwachungssystems ein Ergebnis des betreffenden Korrekturzwischenschritts e) ermittelt und bewertet wird, wonach der Korrekturzwischenschritt e) zum Verbessern des ermittelten Ergebnisses wiederholt wird, wenn die Bewertung weiterhin eine unzulässige Abweichung des ermittelten Ergebnisses von dem vorgegebenen Ergebnis für den betreffenden Schritt ergibt. Mit anderen Worten ist es vorgesehen, dass auch das Ergebnis eines etwaigen Korrekturzwischenschritt e) kontrolliert und auf das Erreichen des vorgegebenen Ergebnisses hin überprüft wird. Falls das vorbestimmte Ergebnis auch nach dem Korrekturzwischenschritt e) nicht oder nicht in ausreichendem Maße erreicht wurde, wird der Korrekturzwischenschritt e) wiederholt, wodurch auch gravierende Prozessfehler sowie Prozesstörungen, die während des Korrekturzwischenschritts e) selbst auftreten, zuverlässig erkannt und gegebenenfalls einer ein- oder mehrfach wiederholten Reparatur bzw. Korrektur unterzogen werden können.

In einer weiteren vorteilhaften Ausgestaltung der Erfindung ist vorgesehen, dass das Ermitteln des Ergebnisses mittels des Überwachungssystems ein Prüfen der Pulverschicht und/oder wenigstens einer Bauteilschicht auf Prozessabweichungen umfasst. Hierdurch können Prozesstörungen im Zusammenhang mit der unverfestigten Pulverschicht und/oder mit einer oder mehreren verfestigten Bauteilschichten erkannt und bedarfsweise korrigiert werden.

In einer weiteren vorteilhaften Ausgestaltung der Erfindung ist vorgesehen, dass das Prüfen der Pulverschicht die Prüfung auf wenigstens eine Prozessabweichung aus der Gruppe Verunreinigung, unzulässige Materialanhäufung und unzureichenden Auftrag der Pulverschicht umfasst und/oder dass das Prüfen der wenigstens einer Bauteilschicht die Prüfung auf wenigstens eine Prozessabweichung aus der Gruppe Balling, unzulässige Materialablagerungen, Schmelzspurveränderung, Rissbildung, Materialdefekt und Bindefehler umfasst. Das Überwachungssystem kann hierzu jede geeignete Komponente umfassen bzw. sich jeder geeigneten Komponente bedienen, welche eine Erfassung von Unregelmäßigkeiten der Pulverschicht und/oder wenigstens einer Bauteilschicht erlaubt. Ein etwaiger Korrekturzwischenschritt e) kann dann beispielsweise bei einem unzureichenden Auftrag der Pulverschicht ein Wiederholen des Pulverauftrags mit einer definierten, gegebenenfalls erniedrigten Dosiermenge an Werkstoffpulver umfassen. Wenn beispielsweise nur ¾ der Bauplattform beschichtet wurden, muss der Korrekturzwischenschritt e) nur etwa die Hälfte oder weniger der normalen Dosiermenge an Werkstoffpulver verwenden , da ja bereits ¾ der gewünschten Fläche beschichtet sind. Bei überschüssigem Werkstoffpulver kann umgekehrt ein entsprechender Abtrag des überschüssigen Pulvers durchgeführt werden. Prozesstörungen der wenigstens einer Bauteilschicht können beispielsweise zu Oberflächenunregelmäßigkeiten wie beispielsweise Ballingeffekte, Materialanhäufungen oder andere Schmelzspurveränderungen führen. Solche Oberflächenunregelmäßigkeiten können beispielsweise durch die Erfassung eines Höhenprofils oder der Oberflächenstruktur ermittelt werden. Werden unzulässige Abweichungen detektiert, die zum Beispiel durch Störung des Verfestigungsschritts, durch Schmauch- oder Materialanlagerungen entstehen können, wird als Korrekturzwischenschritt e) ein entsprechender Reparatur- bzw. Korrekturschritt ausgeführt, bevor der weitere Prozessablauf fortgesetzt wird.

Weitere Vorteile ergeben sich, indem das Prüfen der wenigstens einer Bauteilschicht auf Prozessabweichungen das Prüfen wenigstens eines Oberflächenbereichs einer in einer aktuellen Bauebene liegenden Bauteilschicht und/oder das Prüfen wenigstens einer unterhalb der aktuellen Bauebene liegenden Bauteilschicht umfasst. Hierdurch können wahlweise Oberflächendefekte und/oder Defekte, die ein oder mehrere Schichten unterhalb der aktuellen Bauebene, das heißt innerhalb des bereits hergestellten Bauteilbereichs, liegen, ermittelt und beurteilt werden.

Weitere Vorteile ergeben sich dadurch, dass das Schichtbauverfahren abgebrochen wird, wenn eine vorgegebene Anzahl an Wiederholungen des betreffenden Korrekturzwischenschritts e) erreicht oder überschritten ist und/oder wenn die Abweichung des ermittelten Ergebnisses von dem vorgegebenen Ergebnis für den betreffenden Schritt als nicht behebbar bewertet wird. Mit anderen Worten wird das Schichtbauverfahren abgebrochen, wenn auch eine ein- oder mehrmalige Wiederholung des Korrekturzwischenschritts e) nicht das gewünschte Ergebnis erbringen konnte und/oder wenn die Beurteilung des ermittelten Ergebnisses ergibt, dass eine erfolgreiche Reparatur oder Korrektur von vornherein aussichtslos oder zumindest sehr unwahrscheinlich ist. Hierdurch kann zumindest vermieden werden, dass ein fehlerhaftes Bauteil unnötiger Weise fertiggebaut wird.

In einer weiteren vorteilhaften Ausgestaltung der Erfindung ist vorgesehen, dass der Korrekturzwischenschritt e) eine Wiederholung des betreffenden Schritts a), b) und/oder c) mit identischen und/oder veränderten Prozessparametern umfasst und/oder dass der Korrekturzwischenschritt e) einen vom betreffende Schritt a), b) und/oder c) abweichenden Arbeitsschritt umfasst. Hierdurch kann in Abhängigkeit der Beurteilung des ermittelten Ergebnisses der jeweils aussichtsreichste oder der zwingend erforderliche Korrekturzwischenschritt e) ausgewählt und durchgeführt werden. Beispielsweise entstehen im Fall von Störungen eines Schmelzprozesses (Schritt b)) häufig sogenannte Ballingeffekte, die Kugelbildungen des Schmelzbades auf der geschweißten Oberfläche bezeichnen. Solche Ballingeffekte können zum Beispiel durch optische Tomographie oder andere geeignete Komponenten zur Qualifizierung des Ergebnisses von Schritt b) ermittelt werden. Die auf der Oberfläche gebildeten Kugeln führen beim Aufbau der nächsten Bauteilschicht in vielen Fällen zu Bindefehlern. Folglich sollten beim Erkennen einer solchen Prozessstörung im Korrekturzwischenschritt e) diese entstandenen Ballingeffekte auf der Oberfläche abgetragen oder eingeschmolzen werden, bevor das Schichtbauverfahren fortgesetzt wird. Dies kann zum Beispiel durch wiederholtes Überschweißen mit gleichen oder für ein Glätten optimierten Parametern (z.B. Leistung, Hatch, Geschwindigkeit, ggf. Fokuslage) erfolgen. Alternativ oder zusätzlich kann eine Beschichterklinge zum mechanischen Abtragen der Kugeln im Korrekturzwischenschritt e) verwendet werden.

In einer weiteren vorteilhaften Ausgestaltung der Erfindung ist vorgesehen, dass das Überwachungssystem das Ergebnis wenigstens eines der Schritte a) bis c) mittels einer Wärmebildkamera und/oder einer optischen Tomographieeinrichtung und/oder einer Pulverbettüberwachungseinrichtung und/oder einer Wirbelstromprüfung und/oder mittels einer durchleuchtenden Untersuchungseinrichtung, insbesondere durch Computertomographie, ermittelt. Hierdurch kann das Überwachungssystem eine flexible und zuverlässige Prüfung auf Prozesstörungen durchführen.

Weitere Vorteile ergeben sich, indem das vorgegebene Ergebnis anhand eines Mastermodells ermittelt und in einem Datenspeicher gespeichert wird. Mit anderen Worten ist es vorgesehen, dass das für den jeweiligen Schritt a), b) und/oder c) für eine gegebene Bauteilschicht vorzugebende Ergebnis anhand eines Mastermodells, das auch als Referenzbauteil bezeichnet werden kann, ermittelt, in einem Datenspeicher gespeichert und zur Beurteilung der jeweils ermittelten Ergebnisse der einzelnen Baujobs herangezogen wird. Das Mastermodell selbst kann anhand umfangreicher Prüfungen ermittelt werden. Hierdurch ist sichergestellt, dass für gut befundene Daten die Basis für die Beurteilung der einzelnen Baujobs bilden, ohne dass jedes einzelne Bauteil den gleichen umfangreichen Prüfungen wie das Mastermodell unterzogen werden müsste.

Ein zweiter Aspekt der Erfindung betrifft eine Schichtbauvorrichtung zur additiven Herstellung zumindest eines Bauteilbereichs eines Bauteils durch ein additives Schichtbauverfahren. Die Schichtbauvorrichtung umfasst mindestens eine Pulverzuführung zum Auftrag von mindestens einer Pulverschicht eines Werkstoffs (W) auf eine Aufbau- und Fügezone einer bewegbaren Bauplattform, mindestens eine Strahlungsquelle zum Erzeugen wenigstens eines Energiestrahls zum schichtweisen und lokalen Verfestigen des Werkstoffs (W) zum Ausbilden einer Bauteilschicht durch selektives Belichten des Werkstoffs (W) gemäß einer vorbestimmten Belichtungsstrategie und eine Steuereinrichtung. Die Steuereinrichtung ist dazu ausgebildet, die Pulverzuführung in einem Schritt a) so zu steuern, dass diese mindestens eine Pulverschicht des Werkstoffs (W) auf die Aufbau- und Fügezone der Bauplattform aufträgt, die Strahlungsquelle in einem Schritt b) so zu steuern, dass diese den Energiestrahl erzeugt und den Werkstoff (W) zum Ausbilden der Bauteilschicht schichtweise und lokal gemäß einer vorbestimmten Belichtungsstrategie durch selektives Belichten verfestigt, und die Bauplattform in einem Schritt c) schichtweise um eine vordefinierte Schichtdicke abzusenken. Erfindungsgemäß umfasst die Schichtbauvorrichtung zusätzlich ein Überwachungssystem, welches zum Datenaustausch mit der Steuereinrichtung gekoppelt und dazu ausgebildet ist, im Anschluss an wenigstens einen der Schritte a) bis c) ein Ergebnis des betreffenden Schritts zu ermitteln und zu bewerten, wonach das Überwachungssystem wenigstens eine Komponente derart steuert, dass diese Komponente wenigstens einen Korrekturzwischenschritt e) zum Verbessern des ermittelten Ergebnisses ausführt, wenn die Bewertung eine unzulässige Abweichung des ermittelten Ergebnisses von einem vorgegebenen Ergebnis für den betreffenden Schritt ergibt. Mit anderen Worten ist es erfindungsgemäß vorgesehen, dass die Schichtbauvorrichtung ein Überwachungssystem umfasst, das nach Beendigung wenigstens eines der drei Prozessschritte a) bis c) (a) Beschichten, b) Verfestigen, c) Absenken) eine Kontrolle des Ergebnisses (Output) des betreffenden Prozessschritts a), b) und/oder c) durchführt, indem das Ergebnis mittels des Überwachungssystems ermittelt und beurteilt wird, ob es einem für den betreffenden Schritt gewünschten Ergebnis entspricht bzw. innerhalb akzeptabler Abweichungen liegt. Nachdem das Ergebnis (Output) jedes Schritts a) bis c) zumindest eine Voraussetzung (Input) für die Durchführung des jeweils nachfolgenden Schritts (b), c) und/oder d)) darstellt, kann auf diese Weise bedarfsgerecht sichergestellt werden, dass nicht nur etwaige Verfestigungsfehler, sondern auch andere Prozessabweichungen und Materialstörungen zuverlässig ermittelt, bewertet und im Fall unzulässiger Abweichungen im Rahmen des betreffenden Korrekturzwischenschritts e) behoben werden. Hierdurch wird verhindert, dass ein nachfolgender Prozessschritt b), c) und/oder d) mit einem fehlerhaften "Input" durchgeführt wird, was zusätzliche Fehler nach sich ziehen würde. Neben einer Reduzierung von Ausschuss können auf diese Weise auch Prüfzeiten reduziert werden, da die Ermittlung, Beurteilung und Korrektur automatisiert bzw. ohne manuelle Eingriffe mit Hilfe des Überwachungssystems erfolgen kann. Damit können auch komplexe Bauteile zuverlässig gefertigt werden.

Die Steuereinrichtung und/oder das Überwachungssystem kann bzw. können generell eine Prozessoreinrichtung aufweisen, die dazu eingerichtet ist, die Durchführung der genannten Verfahrensschritte zu steuern bzw. zu regeln. Die Prozessoreinrichtung kann hierzu zumindest einen Mikroprozessor und/oder zumindest einen Mikrocontroller aufweisen. Des Weiteren kann die Steuereinrichtung und/oder das Überwachungssystem ein Speichermedium mit einem Programmcode aufweisen, der dazu eingerichtet ist, bei Ausführen die betreffenden Verfahrensschritte durchzuführen. Der Programmcode kann in einem Datenspeicher der Prozessoreinrichtung und/oder des Überwachungssystems gespeichert sein. Außerdem kann die Steuereinrichtung und/oder das Überwachungssystem ein Speichermedium mit einem Programmcode aufweisen, der dazu eingerichtet ist, eine Ausführungsform des Schichtbauverfahrens gemäß dem ersten Erfindungsaspekt auszuführen. Es kann weiterhin vorgesehen sein, dass das Überwachungssystem durch die Steuereinrichtung gesteuert und/oder geregelt wird. Umgekehrt kann es auch vorgesehen sein, dass das Überwachungssystem die Steuereinrichtung steuert und/oder regelt. Weitere Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind. Umgekehrt sind vorteilhafte Ausgestaltungen des zweiten Erfindungsaspekts als vorteilhafte Ausgestaltungen des ersten Erfindungsaspekts anzusehen. Vorzugsweise ist die Schichtbauvorrichtung dazu ausgebildet, ein Schichtbauverfahren gemäß dem ersten Erfindungsaspekt durchzuführen.

In einer vorteilhaften Ausgestaltung der Erfindung ist vorgesehen, dass die Schichtbauvorrichtung als selektive Lasersinter- und/oder -schmelzvorrichtung ausgebildet ist. Hierdurch können Teilbereiche hergestellt werden, deren mechanischen Eigenschaften zumindest im Wesentlichen denen des Bauteilwerkstoffs entsprechen. Zur Erzeugung eines Laserstrahls kann beispielsweise ein CO₂-Laser, Nd:YAG-Laser, Yb-Faserlaser, Diodenlaser oder dergleichen vorgesehen sein. Ebenso kann vorgesehen sein, dass zwei oder mehr Laserstrahlen verwendet werden. In Abhängigkeit des Bauteilwerkstoffs und der Belichtungsstrategie kann es beim Belichten zu einem Aufschmelzen und/oder zu einem Versintern des Pulvers kommen, so dass im Rahmen der vorliegenden Erfindung unter dem Begriff "Verschweißen" auch "Versintern" und umgekehrt verstanden werden kann.

In einer weiteren vorteilhaften Ausgestaltung der Erfindung ist vorgesehen, dass das Überwachungssystem mit einem Datenspeicher gekoppelt ist, mittels welchem wenigstens ein vorgegebenes Ergebnis für wenigstens einen der Schritte a) bis c) und wenigstens eine Bauteilschicht gespeichert ist. Zum Bewerten eines ermittelten Ergebnisses muss das Überwachungssystem damit lediglich auf den lokalen und/oder entfernten Datenspeicher zugreifen, das für den betreffenden Schritt und die betreffende Bauteilschicht vorgegebene Ergebnis abrufen und zur Bewertung des ermittelten Ergebnisses heranziehen. Das vorgegebene Ergebnis kann in jedem geeigneten Dateiformat im Datenspeicher abgelegt sein. Beispielsweise kann für eine vorgegebene Schichtdicke der Pulverschicht als Schichtdickenwert, gegebenenfalls mit zulässigen Abweichungen, gespeichert sein. Für die Beurteilung eines Verfestigungsschritts b) kann als vorgegebenes Ergebnis eine (thermographische oder tomographische) Abbildung einer entsprechenden Bauteilschicht eines Mastermodells gespeichert sein. Aber auch andere, das gewünschte Ergebnis für einen betreffenden Schritt charakterisierende Daten können vorgesehen sein.

Ein dritter Aspekt der Erfindung betrifft ein Speichermedium mit einem Programmcode, der dazu ausgebildet ist, bei Ausführen durch eine Steuereinrichtung eine Schichtbauvorrichtung gemäß dem zweiten Erfindungsaspekt so zu steuern, dass diese ein Schichtbauverfahren gemäß dem ersten Erfindungsaspekt durchführt. Die sich hieraus ergebenden Merkmale und deren Vorteile sind den Beschreibungen des ersten und zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts anzusehen sind und umgekehrt.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine Aufnahme einer fehlerhaften Bauteilschicht;
- Fig. 2: eine Aufnahme einer Oberfläche der fehlerhaften Bauteilschicht;
- Fig. 3: eine Aufnahme der Oberfläche der Bauteilschicht nach dem Durchführen eines Korrekturzwischenschritts; und
- Fig. 4: eine Prinzipdarstellung eines erfindungsgemäßen Schichtbauverfahrens.

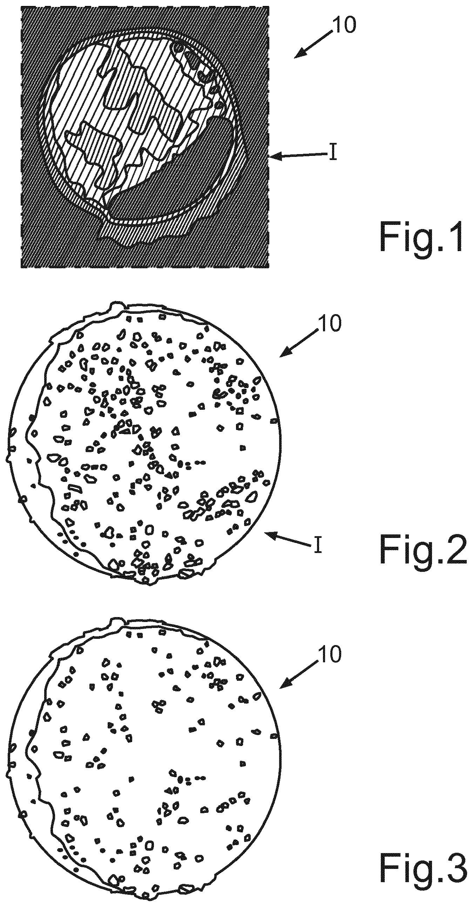

**Fig. 1** zeigt eine Aufnahme einer Bauteilschicht 10, die mittels eines Schichtbauverfahrens additiv durch Laserschmelzen hergestellt wurde, wobei die Bauteilschicht 10 aufgrund einer Prozessabweichung während des Verfestigungsschritts im mit Pfeil I gekennzeichneten Bereich fehlerhaft ist. Die Aufnahme wurde mit Hilfe einer optischen Tomographieeinrichtung (OT) erstellt, wobei grundsätzlich auch andere geeignete Überwachungseinrichtungen verwendet werden können. Unregelmäßigkeiten können zum Beispiel durch sogenannte Ballingeffekte, durch Materialanhäufungen, durch unzureichenden Pulverauftrag, durch Störung des Schweißprozesses, durch Schmauch oder Materialanlagerungen oder durch Schmelzspurveränderungen entstehen.

**Fig. 2** zeigt eine Aufnahme der Oberfläche der fehlerhaften Bauteilschicht 10, wobei man erkennt, dass die Oberfläche im Bereich I eine unzulässige Rauheit aufweist. Die Oberflächenstruktur kann beispielsweise durch die Erfassung eines Höhenprofils ermittelt werden. In erster Linie beruht die Oberflächenunregelmäßigkeit im vorliegenden Fall auf sogenannten Ballingeffekten. Ballingeffekte treten im Fall von Störungen des Schmelzprozesses während des Verfestigungsschritts auf und umfassend Kugelbildungen des Schmelzbades auf der geschweißten Oberfläche, welche durch die OT oder andere Überwachungssysteme zur Qualifizierung des Schweißprozesses erfasst werden können. Diese Kugeln und andere Unebenheiten führen beim Schichtaufbau der nächsten Bauteilschicht 10 in vielen Fällen zu Bindefehlern, was zu einer verschlechterten Fügequalität und im schlimmsten Fall dazu führt, dass das fertige Bauteil 26 bzw. der fertige Bauteilbereich Ausschuss ist.

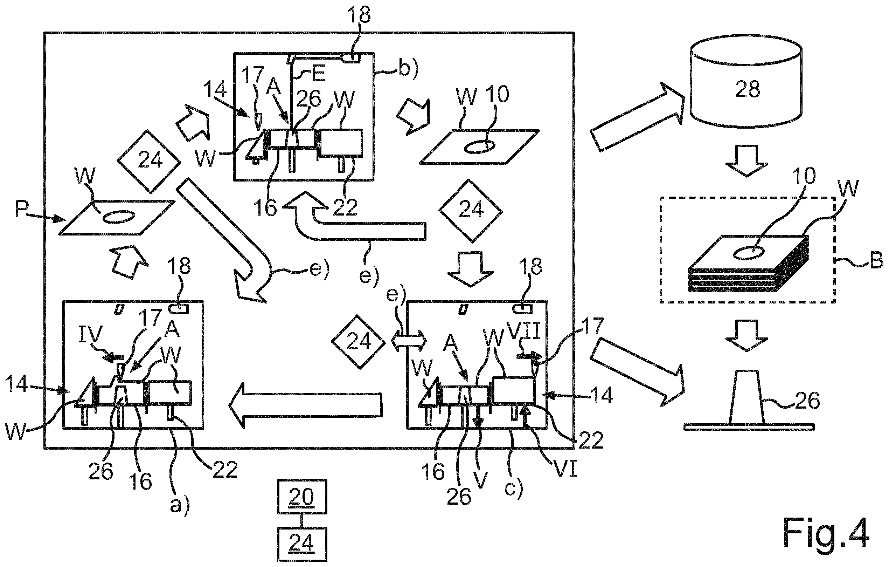

Zur Reduzierung von Ausschuss wird das Ergebnis des Verfestigungsschritts b) erfindungsgemäß mittels eines Überwachungssystems 24 (s. Fig. 4) ermittelt und bewertet, wonach wenigstens ein Korrekturzwischenschritt e) zum Verbessern des ermittelten Ergebnisses ausgeführt wird, wenn die Bewertung eine unzulässige Abweichung des ermittelten Ergebnisses von einem vorgegebenen Ergebnis für den betreffenden Schritt ergibt bzw. ergeben hat. Im vorliegenden Fall umfasst der Korrekturzwischenschritt die ein- oder mehrfache Wiederholung des Verfestigungsschritts, das heißt ein Überschweißen der Bauteilschicht 10. Dabei können grundsätzlich die gleichen Parameter oder für ein Glätten optimierte Parametern (z.B. Leistung, Hatch, Geschwindigkeit, ggf. Fokuslage etc.) verwendet werden. Auch der Einsatz einer Beschichterklinge 17 oder anderer geeigneter Komponenten zum mechanischen Abtragen der Oberflächenunebenheiten kann, wie im Zusammenhang mit **Fig. 4** näher erläutert wird, vorgesehen sein.

**Fig. 3** zeigt eine Aufnahme der Oberfläche der Bauteilschicht 10 nach dem Durchführen des Korrekturzwischenschritts. Man erkennt, dass die Oberfläche durch das Überschweißen wesentlich vergleichmäßigt wurde und damit wieder eine gute Grundlage für einen nachfolgenden Schichtaufbau darstellt. Werden die beim fehlerbehafteten Schweißprozess entstandenen Oberflächenveränderungen vollständig abgetragen und/oder umgeschmolzen, entstehen im weiteren Aufbauprozess keine Materialdefekte. Neben einer erhöhten Fügequalität wird damit auch Ausschuss erheblich reduziert oder sogar vollständig vermieden.

**Fig. 4** zeigt eine Prinzipdarstellung eines erfindungsgemäßen Schichtbauverfahrens, das mit Hilfe einer erfindungsgemäßen Schichtbauvorrichtung durchgeführt wird. Die Schichtbauvorrichtung, die vorliegend als Laserschmelz- oder -sintervorrichtung ausgebildet und aus Gründen der Übersichtlichkeit nicht in ihrer Gesamtheit gezeigt ist, umfasst eine Pulverzuführung 14 zum Auftrag von mindestens einer Pulverschicht P eines Werkstoffs (W) auf eine Aufbau- und Fügezone A einer bewegbaren Bauplattform 16 gemäß einem Beschichtungsschritt a). Die Pulverzuführung 14 weist vorliegend eine grundsätzlich optionale Beschichterklinge 17 auf, die gemäß Pfeil IV über die Pulverschicht P bewegt und mittels welcher die Pulverschicht P vergleichmäßigt und überschüssiges Werkstoffpulver entfernt werden kann.

Weiterhin umfasst die Schichtbauvorrichtung mindestens eine Strahlungsquelle 18, mittels welcher in einem Verfestigungsschritt b) wenigstens ein Energiestrahl E zum schichtweisen und lokalen Verfestigen des Werkstoffs W erzeugt wird. Hierdurch kann eine Bauteilschicht 10 durch selektives Belichten des Werkstoffs W gemäß einer vorbestimmten Belichtungsstrategie erzeugt werden. Die Strahlungsquelle 18 ist vorliegend als Lasereinrichtung ausgebildet, wobei alternativ oder zusätzlich auch eine oder mehrere Elektronenstrahlquellen vorgesehen sein können.

Zusätzlich weist die Schichtbauvorrichtung eine Steuereinrichtung 20 auf. Die Steuereinrichtung 20 ist dazu ausgebildet, die Pulverzuführung 14 in Schritt a) so zu steuern, dass diese mindestens eine Pulverschicht P des Werkstoffs W auf die Aufbau- und Fügezone A der Bauplattform 16 aufträgt. Unter dem Begriff "steuern" kann im Rahmen der vorliegenden Offenbarung grundsätzlich auch "regeln" verstanden werden. Weiterhin steuert bzw. regelt die Steuereinrichtung 20 die Strahlungsquelle 18 in Schritt b) so, dass diese den Energiestrahl E erzeugt und den Werkstoff W zum Ausbilden der Bauteilschicht 10 schichtweise und lokal gemäß der vorbestimmten Belichtungsstrategie durch selektives Belichten verfestigt. Anschließend senkt die Steuereinrichtung 20 die Bauplattform 16 gemäß Pfeil V in einem Schritt c) schichtweise um eine vordefinierte Schichtdicke ab. Dabei kann es optional vorgesehen sein, dass ein Pulverreservoir 22 gemäß Pfeil VI relativ zur Bauplattform 16 angehoben wird. Grundsätzlich sind jedoch auch andere Arten des Pulverauftrags bekannt. Anschließend kann die gemäß Pfeil VII in eine Startposition verfahrene Beschichterklinge 17 in einem neuen Verfahrensdurchgang gemäß Schritt a) wieder zum Auftragen einer neuen Pulverschicht P verwendet werden usw. Die Schritt a) bis c) werden bis zur Fertigstellung eines Bauteils 26 oder eines seiner Bauteilbereiche durchgeführt.

Zur Erkennung und Behebung von Prozessstörungen umfasst die Schichtbauvorrichtung ein Überwachungssystem 24, welches zum Datenaustausch mit der Steuereinrichtung 20 gekoppelt und dazu ausgebildet ist, im Anschluss an wenigstens einen der Schritte a) bis c) ein Ergebnis des betreffenden Schritts a), b) und/oder c) zu ermitteln und anhand eines vorgegebenen Ergebnisses für den betreffenden Schritt zu bewerten. Das Überwachungssystem 24 und die Steuereinrichtung 20 müssen nicht zwingend separate Bauteile sein, wie dies in Fig. 4 angedeutet ist. In Abhängigkeit der Bewertung steuert das Überwachungssystem 24 wenigstens eine Komponente der Schichtbauvorrichtung derart, dass diese Komponente wenigstens einen Korrekturzwischenschritt e) zum Verbessern des ermittelten Ergebnisses ausführt, wenn die Bewertung eine unzulässige Abweichung des ermittelten Ergebnisses von dem vorgegebenen Ergebnis für den betreffenden Schritt ergibt. Die Komponente kann beispielsweise die Pulverzuführung 14, die Beschichterklinge 17, die Bauplattform 16 und/oder die Strahlungsquelle 18 umfassen oder sein.

Wie man in Fig. 4 erkennt, erfolgt im gezeigten Ausführungsbeispiel nach Schritt a) mit Hilfe des Überwachungssystems 24 eine Ermittlung und Beurteilung der Pulverschicht P. Falls die Pulverschicht P als korrekt aufgebracht ("in Ordnung", i. O.) bewertet wird, wird das Verfahren mit Schritt b) fortgesetzt. Falls die Pulverschicht P als "nicht in Ordnung" (n. i. O.) bewertet wird, wird zur Korrektur bzw. Reparatur der Pulverschicht P ein erster Korrekturzwischenschritt e) durchgeführt. Der Korrekturzwischenschritt e) kann im einfachsten Fall bei unzureichender Beschichtung ein Wiederholen des Pulverauftrags gemäß Schritt a) mit einer definierten Dosiermenge an Werkstoff W sein. Wenn beispielsweise nur ¾ der Aufbau- und Fügezone A korrekt beschichtet wurden, muss für den Korrekturzwischenschritt e) nur etwa die Hälfte oder weniger der normalen Dosiermenge verwendet werden.

Im Anschluss an Schritt b) erfolgt dementsprechend mit Hilfe des Überwachungssystems 24 eine Ermittlung und Bewertung der verfestigten Bauteilschicht 10. Im Fall von Störungen des Schmelzprozesses entstehen häufig sogenannte Ballingeffekte, die eine Kugelbildung des Schmelzbades auf der geschweißten Oberfläche beschreiben und welche - wie vorstehend erläutert - durch die OT oder andere Überwachungssysteme zur Qualifizierung des Schweißprozesses erfasst werden können. Wenn die Bewertung der hergestellten Bauteilschicht 10 das Durchführen eines entsprechenden Korrekturzwischenschritts e) notwendig macht, kann die Bauteilschicht 10 zum Beispiel durch einmaliges oder wiederholtes Überschweißen mit gleichen oder für ein Glätten optimierten Parametern (z.B. Leistung, Hatch, Geschwindigkeit, ggf. Fokuslage) korrigiert werden. Auch der Einsatz der Beschichterklinge 17 zum mechanischen Glätten der Oberfläche kann vorgesehen sein.

In Schichtbauverfahren können generell Materialfehler wie Risse, Poren und Bindefehler auftreten. Verschiedene Prüftechniken bieten grundsätzlich die Möglichkeit, diese Fehler zu detektieren. So kann beispielsweise durch thermographische Verfahren eine Materialtrennung (Bindefehler) auch wenige Schichten (<5-10 Schichten) unterhalb der aktuellen Bauebene gefunden werden. Auch andere Verfahren wie beispielsweise Wirbelstromprüfung zur Detektion von Rissen oder Online-Röntgen-Computertomographie-Verfahren eigenen sich zur Ermittlung und Bewertung eines gewissen Bereiches unterhalb der aktuellen Bauebene. Reagiert man jedoch nicht sofort im Schichtbauprozess auf etwaig gefundene Materialstörungen, sondern setzt den Aufbau einfach fort, verbleibt der Fehler im Material und das Bauteil 26 wird zu Ausschuss sofern der Fehler eine bestimmte Größe oder Kritikalität aufweist.

Wird ein tatsächlicher Defekt im bereits verfestigten Bauteil 26 wenige (1-10) Schichten unterhalb der aktuellen Bauebene detektiert, kann als Korrekturzwischenschritt e) mit Hilfe angepasster Parameter mit der Strahlungsquelle 18 oder mit einer zusätzlichen Reparaturstrahlungsquelle (nicht gezeigt) die betroffene Stelle erneut umgeschmolzen werden. Dabei müssen die Parameter so gewählt werden, dass die Einschweißtiefe des Energiestrahls E die Tiefe des Defekts erreicht, damit der Binde- oder Fügefehler an der betreffenden Stelle repariert wird. Wird beispielsweise ein Bindefehler n Schichten (n=1 bis 10) unterhalb der aktuellen Bauebene detektiert, muss der folgende Korrekturzwischenschritt e) bis mindestens in eine Tiefe von n+1, n+2 oder n+3 Bauteilschichten 10 umschmelzen, um den Fehler zu beheben. Anschließend kann das Schichtbauverfahren normal fortgesetzt werden.

Zur Bewertung des für die betreffende Bauteilschicht 10 ermittelten Ergebnisses greift das Überwachungssystem 24 im vorliegenden Ausführungsbeispiel auf einen Datenspeicher 28 zu, in welchem Referenzdaten für die betreffende Bauteilschicht 10 gespeichert sind. Die Referenzdaten wurden dabei anhand eines geprüften Master- oder Referenzmodells ermittelt. Generell kann auch vorgesehen sein, dass die Bewertung durch das Überwachungssystem 24 ohne Abgleich mit tatsächlichen Meßdaten, sondern beispielsweise nur anhand theoretisch ermittelter Modelldaten erfolgt. Im Datenspeicher 28 können zudem die ermittelten Ergebnisse des aktuellen Baujobs B abgelegt werden, beispielsweise zu Dokumentationszwecken, um eine Nachbewertung der einzelnen Bauteilschichten 10 bzw. des fertigen Bauteils 26 vorzunehmen oder um die betreffende Bauteilschicht 10 als neue Referenz im Datenspeicher 28 zu speichern.

Generell kann vorgesehen sein, dass auch jeder Korrekturzwischenschritt e) dahingehend bewertet wird, ob die gewünschte Verbesserung des Ergebnisses stattgefunden hat oder ob weitere Korrekturen/Reparaturen notwendig sind. Sollte eine Prozessstörung ein bestimmtes Grenzkriterium verletzen, sodass eine Korrektur oder Reparatur des betreffenden Fehlers unwahrscheinlich oder unmöglich erscheint oder ist, unterbricht das Überwachungssystem 24 generell den weiteren Aufbauprozess für das betroffene Bauteil 26.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Bauteilschicht
- 14: Pulverzuführung
- 16: Bauplattform
- 17: Beschichterklinge
- 18: Strahlungsquelle
- 20: Steuereinrichtung
- 22: Pulverreservoir
- 24: Überwachungssystem
- 26: Bauteil
- 28: Datenspeicher
- A: Aufbau- und Fügezone
- B: Baujob
- E: Energiestrahl
- P: Pulverschicht
- W: Werkstoff
- a) - e): Verfahrensschritt
- I: Bereich
- IV- VII: Pfeil

## Patentansprüche

1. Schichtbauverfahren zum additiven Herstellen zumindest eines Bauteilbereichs eines Bauteils (26), insbesondere eines Bauteils (26) einer Strömungsmaschine, umfassend zumindest folgende Schritte:
a) Auftragen von mindestens einer Pulverschicht (P) eines Werkstoffs (W) auf mindestens eine Aufbau- und Fügezone (A) mindestens einer absenkbaren Bauplattform (16);
b) lokales Verfestigen des Werkstoffs (W) zum Ausbilden einer Bauteilschicht (10) durch selektives Belichten des Werkstoffs (W) mit wenigstens einem Energiestrahl (E) gemäß einer vorbestimmten Belichtungsstrategie;
c) Schichtweises Absenken der Bauplattform (16) um eine vordefinierte Schichtdicke; und
d) Wiederholen der Schritte a) bis c) bis zur Fertigstellung des Bauteilbereichs,
wobei im Anschluss an wenigstens einen der Schritte a) bis c) mittels eines Überwachungssystems (24) ein Ergebnis des betreffenden Schritts ermittelt und bewertet wird, wonach wenigstens ein Korrekturzwischenschritt e) zum Verbessern des ermittelten Ergebnisses ausgeführt wird, wenn die Bewertung eine unzulässige Abweichung des ermittelten Ergebnisses von einem vorgegebenen Ergebnis für den betreffenden Schritt ergibt
**dadurch gekennzeichnet, dass**
im Anschluss an den wenigstens einen Korrekturzwischenschritt e) mittels des Überwachungssystems (24) ein Ergebnis des betreffenden Korrekturzwischenschritts e) ermittelt und bewertet wird, wonach der Korrekturzwischenschritt e) zum Verbessern des ermittelten Ergebnisses wiederholt wird, wenn die Bewertung weiterhin eine unzulässige Abweichung des ermittelten Ergebnisses von dem vorgegebenen Ergebnis für den betreffenden Schritt ergibt.

2. Schichtbauverfahren nach Anspruch 1,
**dadurch gekennzeichnet, dass**
das Ermitteln des Ergebnisses mittels des Überwachungssystems (24) ein Prüfen der Pulverschicht (P) und/oder wenigstens einer Bauteilschicht (10) auf Prozessabweichungen umfasst.

3. Schichtbauverfahren nach Anspruch 2,
**dadurch gekennzeichnet, dass**
das Prüfen der Pulverschicht (P) die Prüfung auf wenigstens eine Prozessabweichung aus der Gruppe Verunreinigung, unzulässige Materialanhäufung und unzureichenden Auftrag der Pulverschicht (P) umfasst und/oder dass das Prüfen der wenigstens einer Bauteilschicht (10) die Prüfung auf wenigstens eine Prozessabweichung aus der Gruppe Balling, unzulässige Materialablagerungen, Schmelzspurveränderung, Rißbildung, Materialdefekt und Bindefehler umfasst.

4. Schichtbauverfahren nach Anspruch 2 oder 3,
**dadurch gekennzeichnet, dass**
das Prüfen der wenigstens einer Bauteilschicht (10) auf Prozessabweichungen das Prüfen wenigstens eines Oberflächenbereichs einer in einer aktuellen Bauebene liegenden Bauteilschicht und/oder das Prüfen wenigstens einer unterhalb der aktuellen Bauebene liegenden Bauteilschicht (10) umfasst.

5. Schichtbauverfahren nach einem der Ansprüche 1 bis 4,
**dadurch gekennzeichnet, dass**
das Schichtbauverfahren abgebrochen wird, wenn eine vorgegebene Anzahl an Wiederholungen des betreffenden Korrekturzwischenschritts e) erreicht oder überschritten ist und/oder wenn die Abweichung des ermittelten Ergebnisses von dem vorgegebenen Ergebnis für den betreffenden Schritt als nicht behebbar bewertet wird.

6. Schichtbauverfahren nach einem der Ansprüche 1 bis 5,
**dadurch gekennzeichnet, dass**
der Korrekturzwischenschritt e) eine Wiederholung des betreffenden Schritts a), b) und/oder c) mit identischen und/oder veränderten Prozessparametern umfasst und/oder dass der Korrekturzwischenschritt e) einen vom betreffende Schritt a), b) und/oder c) abweichenden Arbeitsschritt umfasst.

7. Schichtbauverfahren nach einem der Ansprüche 1 bis 6,
**dadurch gekennzeichnet, dass**
das Überwachungssystem (24) das Ergebnis wenigstens eines der Schritte a) bis c) mittels einer Wärmebildkamera und/oder einer optischen Tomographieeinrichtung und/oder einer Pulverbettüberwachungseinrichtung und/oder einer Wirbelstromprüfung und/oder mittels einer durchleuchtenden Untersuchungseinrichtung, insbesondere durch Computertomographie, ermittelt.

8. Schichtbauverfahren nach einem der Ansprüche 1 bis 7,
**dadurch gekennzeichnet, dass**
das vorgegebene Ergebnis anhand eines Mastermodells ermittelt und in einem Datenspeicher (28) gespeichert wird.

9. Schichtbauvorrichtung zur additiven Herstellung zumindest eines Bauteilbereichs eines Bauteils (26) durch ein additives Schichtbauverfahren, umfassend:
- mindestens eine Pulverzuführung (14) zum Auftrag von mindestens einer Pulverschicht (P) eines Werkstoffs (W) auf eine Aufbau- und Fügezone (A) einer bewegbaren Bauplattform (16);
- mindestens eine Strahlungsquelle (18) zum Erzeugen wenigstens eines Energiestrahls (E) zum schichtweisen und lokalen Verfestigen des Werkstoffs (W) zum Ausbilden einer Bauteilschicht (10) durch selektives Belichten des Werkstoffs (W) gemäß einer vorbestimmten Belichtungsstrategie; und
- eine Steuereinrichtung (20), welche dazu ausgebildet ist:
- die Pulverzuführung (14) in einem Schritt a) so zu steuern, dass diese mindestens eine Pulverschicht (P) des Werkstoffs (W) auf die Aufbau- und Fügezone (A) der Bauplattform (16) aufträgt;
- die Strahlungsquelle (18) in einem Schritt b) so zu steuern, dass diese den Energiestrahl (E) erzeugt und den Werkstoff (W) zum Ausbilden der Bauteilschicht (10) schichtweise und lokal gemäß einer vorbestimmten Belichtungsstrategie durch selektives Belichten verfestigt; und
- die Bauplattform (16) in einem Schritt c) schichtweise um eine vordefinierte Schichtdicke abzusenken,
ein Überwachungssystem (24), welches zum Datenaustausch mit der Steuereinrichtung (20) gekoppelt und dazu ausgebildet ist, im Anschluss an wenigstens einen der Schritte a) bis c) ein Ergebnis des betreffenden Schritts zu ermitteln und zu bewerten, wonach das Überwachungssystem (24) wenigstens eine Komponente derart steuert, dass diese Komponente wenigstens einen Korrekturzwischenschritt e) zum Verbessern des ermittelten Ergebnisses ausführt, wenn die Bewertung eine unzulässige Abweichung des ermittelten Ergebnisses von einem vorgegebenen Ergebnis für den betreffenden Schritt ergibt
**dadurch gekennzeichnet, dass**
im Anschluss an den wenigstens einen Korrekturzwischenschritt e) mittels des Überwachungssystems (24) ein Ergebnis des betreffenden Korrekturzwischenschritts e) ermittelt und bewertet wird, wonach der Korrekturzwischenschritt e) zum Verbessern des ermittelten Ergebnisses wiederholt wird, wenn die Bewertung weiterhin eine unzulässige Abweichung des ermittelten Ergebnisses von dem vorgegebenen Ergebnis für den betreffenden Schritt ergibt.

10. Schichtbauvorrichtung nach Anspruch 9,
**dadurch gekennzeichnet, dass**
diese als selektive Lasersinter- und/oder -schmelzvorrichtung ausgebildet ist.

11. Schichtbauvorrichtung nach Anspruch 9 oder 10,
**dadurch gekennzeichnet, dass**
das Überwachungssystem (24) mit einem Datenspeicher (28) gekoppelt ist, mittels welchem wenigstens ein vorgegebenes Ergebnis für wenigstens einen der Schritte a) bis c) und wenigstens eine Bauteilschicht (10) gespeichert ist.

12. Speichermedium mit einem Programmcode, der dazu ausgebildet ist, bei Ausführen durch eine Steuereinrichtung (20) eine Schichtbauvorrichtung gemäß einem der Ansprüche 9 bis 11 so zu steuern, dass diese ein Schichtbauverfahren nach einem der Ansprüche 1 bis 8 durchführt.
